# EUROPÄISCHE PATENTANMELDUNG

(11) **EP 1 757 857 A1**
(43) Veröffentlichungstag der Anmeldung: **28.02.2007**
(21) Anmeldenummer: 06014309.6
(22) Anmeldetag: 11.07.2006
(51) Int. Cl.: F21S 8/10, B60Q 1/26, F21V 5/00, F21V 9/08

(54) **Fahrzeugleuchte**

(30) Priorität: 24.08.2005 DE 102005040100
(71) Anmelder: Bayerische Motoren Werke Aktiengesellschaft, 80809 München (DE)
(72) Erfinder: Befelein, Carsten, 85540 Haar (DE)

(57) **Zusammenfassung**

Fahrzeugleuchte, insbesondere Heckleuchte eines Kraftfahrzeuges, mit wenigstens einer in einem Leuchtengehäuse angeordneten Lichtquelle und mit einer das Leuchtengehäuse abschließenden transparenten Lichtabschlussscheibe, wobei wenigstens einer zu einem ersten Leuchtenfunktionsbereich zugeordneten Lichtquelle, auf der der Lichtabschlussscheibe zugewandten Seite eine Leuchtkörperanordnung vorgelagert ist, die im Wesentlichen aus mehreren durchleuchtbaren, lichtstreuende Mittel aufweisenden Leuchtkörpern besteht, und wobei zwischen den Leuchtkörpern wenigstens ein Trennbereich vorgesehen ist, gegenüber dem die Leuchtkörper räumlich hervorstehen.

## Beschreibung

Die Erfindung betrifft eine Fahrzeugleuchte, insbesondere eine Heckleuchte eines Kraftfahrzeuges, mit wenigstens einer in einem Leuchtengehäuse angeordneten Lichtquelle und mit einer das Leuchtengehäuse abschließenden transparenten Lichtabschlussscheibe.

Im modernen Leuchtendesign für Fahrzeuge, insbesondere für Kraftfahrzeuge, werden zunehmend sowohl für Frontleuchten als auch für Heckleuchten klare Lichtabschlussscheiben zur Abdeckung verwendet, die den Einblick auf technische Details im Leuchteninneren ermöglichen. Komplizierte Lichtverteilungen, Verstellmöglichkeiten und die Unterbringung mehrerer Leuchtfunktionen in einem gemeinsamen Gehäuse können auf diese Weise einfacher realisiert und besser in die Fahrzeuggeometrie integriert werden, im Vergleich zu herkömmlichen Fahrzeugleuchten, bei denen die Lichtabschlussscheibe selbst als optisch aktives Element verwendet wird. Neben den konstruktiven Vorgaben an bestimmte Baugrößen und Formen, unter Berücksichtigung der gesetzliche Vorgaben bezüglich der Lichtfunktionen und der Lichtverteilung, sollen Fahrzeugleuchten auch ein harmonisches Erscheinungsbild vermitteln. Insbesondere bei Heckleuchten, bei denen zudem eine möglichst geringe Bautiefe verlangt wird, um die Leuchte im flachen Heckklappen- und/oder Heckseitenbereich in die Fahrzeugkarosserie zu integrieren, ist die Vereinbarung von Funktion, Konstruktion und optischem Design jedoch schwierig.

Bekannte Heckleuchten verwenden stabförmige Lichtleiter, wie sie beispielsweise in der DE 100 29 542 A1 beschrieben sind, bei denen das erforderliche Licht an den Lichtleiterenden vorzugsweise über LEDs (lichtemittierende Dioden) eingekoppelt wird. Der größte Teil des eingekoppelten Lichts wird quer zur Längsrichtung des Lichtleiters über eine gegenüber einer reflektierenden Fläche liegenden transparenten Lichtaustrittsfläche nach außen abgestrahlt. Durch die reflektierende Fläche kann eine Abstrahlcharakteristik, d.h. eine bestimmte Lichtverteilung, beispielsweise eine möglichst gleichmäßige Abstrahlung über ein bestimmte Fläche, gestaltet werden. Dies wird beispielsweise mit einer Vielzahl von Prismenelementen an der reflektierenden Fläche erreicht. Die Prismierung kann auch, in Wirkverbindung mit einer entsprechend geformten Lichtaustrittfläche, zusätzlich die Funktion eines Rückstrahlers (sogenannten Retroreflektors) übernehmen, der von außen auf die Leuchte auftreffendes Licht zurückwirft.

Nachteilig daran ist, dass auf diese Weise zwar eine relativ geringe Bautiefe einer Leuchte realisierbar ist, wie sie insbesondere im Fahrzeugheckbereich gefordert wird, dabei aber über die klare Lichtabschlussscheibe, die jeweilige Prismenstruktur deutlich sichtbar ist. Diese Prismenstruktur kann mitunter auf den optischen Eindruck störend, insbesondere inhomogen, wirken. Aufgrund ihrer Transparenz (an der Lichtaustrittsfläche) und ihrer geringen Bautiefe erscheinen zudem die Lichtleiter im Tages- und Nachtdesign, d.h. sowohl ausgeschaltet ohne Licht als auch eingeschaltet mit Licht eher unvorteilhaft zweidimensional.

Weiterhin sind beispielsweise aus der DE 199 507 00 A1, der DE 44 25 401 A1 und der DE 103 43 639 A1 Fahrzeugleuchten bekannt, die mit einer Durchlichttechnik arbeiten, bei den zwischen einer Lichtquelle und einer Lichtscheibe, zur Erzielung einer bestimmen Lichtverteilung oder Farbgebung zumindest in Teilbereichen optische Flächenelemente wie Linsenoptiken, Prismenscheiben oder Farbscheiben angeordnet sind, die rückwärtig von einer Glühlampe und/oder einer LED, über einem Reflektor durchstrahlt werden.

Nachteilig wirkt sich aus, dass die Linsenoptiken, Prismenscheiben oder Farbscheiben sowie die Reflektoren eher asymmetrisch auf den Gesamteindruck der Leuchte wirken, da sie zur Erzeugung einer vorgegebenen Abstrahlcharakteristik dienen und entsprechend konstruiert sind. Dabei kann das optische Design allenfalls untergeordnet berücksichtigt werden. Zudem benötigt die Durchlichttechnik mit komplexen Reflektoren in Kombination mit Glühlampen und/oder LEDs als Lichtquellen relativ viel Bauraum. Daher sind diese Leuchten für Heckleuchten im flachen Heckklappen- und Seitenbereich eher ungeeignet.

Aufgabe der vorliegenden Erfindung ist es daher, eine Fahrzeugleuchte, insbesondere eine Heckleuchte, mit einer transparenten Lichtabschlussscheibe zu schaffen, die einen homogenen und auch bei einer geringen Bautiefe einen dreidimensionalen optischen Eindruck vermittelt und die sowohl eingeschaltet im Nachdesign als auch ausgeschaltet im Tagdesign ein hochwertiges Erscheinungsbild bietet.

Diese Aufgabe wird in Verbindung mit dem Oberbegriff des Anspruches 1 dadurch gelöst, dass wenigstens einer zu einem ersten Leuchtenfunktionsbereich zugeordneten Lichtquelle, auf der der Lichtabschlussscheibe zugewandten Seite eine Leuchtkörperanordnung vorgelagert ist, die im Wesentlichen aus mehreren durchleuchtbaren, lichtstreuende Mittel aufweisenden Leuchtkörpern besteht, und dass zwischen den Leuchtkörpern wenigstens ein Trennbereich vorgesehen ist, gegenüber dem die Leuchtkörper räumlich hervorstehen.

Durch die Leuchtkörper, im Folgenden auch Lichtbänke genannt, wird eine Fahrzeugleuchte geschaffen, die, unabhängig von ihrer tatsächlichen Bautiefe, d.h. insbesondere auch bei einer geringen Bautiefe, eine dreidimensionale und sehr homogene Erscheinung sowohl in eingeschaltetem als auch in ausgeschalteten Zustand bietet. Während die lichtstreuenden Mittel das Erscheinungsbild der Leuchte homogenisieren, vermitteln die dreidimensionalen Lichtbänke hinter der transparenten Lichtabschlussscheibe den Eindruck einer räumlichen Tiefe. Durch eine vorzugsweise alternierende Folge von vorstehenden Lichtbänken und zurückliegenden Trennbereichen entsteht ein besonders ausgeprägter Eindruck einer räumlichen Tiefe.

Durch die lichtstreuenden Mittel sind die Lichtbänke undurchsichtig, diffus durchscheinend (opak), so dass die vorgesehenen Abstrahlungseigenschaften zumindest im Wesentlichen erhalten bleiben oder sogar zusätzlich unterstützt werden, jedoch technische Details der Gestaltungsmittel nicht einsehbar sind. Die hinter den Lichtkörpern angeordneten Mittel zur Gestaltung der Lichtverteilung können in an sich bekannter Weise oder sogar mit geringerem Konstruktionsaufwand realisiert sein, da die Details der Lichtquelle, beispielsweise asymmetrische Prismenstrukturen an Lichtleitern oder Primenscheiben, nicht mehr sichtbar sind und daher deren äußere Gestaltung weitgehend aufwandsarm sein kann. Somit wird eine einfach und kostengünstig herstellbare Leuchte in hochwertigem Design zur Verfügung gestellt.

Die Tiefenwirkung der erfindungsgemäßen Leuchtkörperanordnung kann bei eingeschalteter Leuchte noch dadurch verstärkt werden, dass, wie bei einer bevorzugten Ausführungsform der Erfindung vorgesehen, die zwischen den Leuchtkörpern vorgesehenen Trennbereiche wenigstens einen weiteren Leuchtenfunktionsbereich mit wenigstens einer weiteren Lichtquelle aufweisen. Das von diesen Zwischenbereichen ausgehende, dem jeweiligen Leuchtenfunktionsbereich entsprechende Licht, wird teilweise an den hervorstehenden Seitenwänden der Leuchtkörper gestreut, wodurch die vorstehenden Seitenwände zusätzlich hervorgehoben werden. Zwischen den Lichtbänken können sowohl leuchtende als auch nichtleuchtende Trennbereiche / Trennflächen, auch miteinander kombiniert, vorgesehen sein. Beispielsweise können einzelne oder alle Trennbereiche auch als gänzlich optisch inaktive oder als passive, mit rückstrahlenden Eigenschaften ausgebildete Trennflächen ausgebildet sein.

Gemäß einer weiteren bevorzugten Ausführungsform der Erfindung weist wenigstens ein Leuchtkörper der Leuchtkörperanordnung eine quer zu einer Abstrahlrichtung langgestreckte Form auf. Besonders vorteilhaft ist eine Leuchtkörperanordnung, die mehrere quer zu der Abstrahlrichtung langgestreckte, stapelförmig angeordnete, vorzugsweise horizontal ausgerichtete Leuchtkörper aufweist. Die Seitenwände der Lichtbänke können im Wesentlichen parallel zur Abstrahlrichtung verlaufen.

Bei dieser Anordnung von langgestreckten, beispielsweise rechteckigen quaderförmigen Leuchtkörpern, bzw. Lichtbänken, vermitteln die markanten Stirn- und Seitenflächen der Lichtbänke hinter der transparenten Lichtabschlussscheibe auf besonders effektive Weise den Eindruck einer räumlichen Tiefe. Diese Anordnung ermöglicht insbesondere eine kompakte und ansprechend erscheinende Heckleuchte zu realisieren, die, unter Berücksichtigung der vorgeschrieben Leuchtflächen und Abstrahlungsstärken, alle üblichen Signallichter, d.h. Schlusslicht, Fahrtrichtungsanzeiger (Blinklicht), Bremslicht, Rückfahrscheinwerfer und Nebelschlussleuchte in ein kompaktes ein oder mehrteiliges Leuchtengehäuse aufnimmt. Beispielsweise können zwei oder drei Lichtbänke dem Schlusslicht zugeordnet sein und die übrigen Funktionen zwischen, bzw. ober- und/oder unterhalb der Lichtbänke angeordnet sein.

Grundsätzlich können die Lichtbänke auch in anderen Formen ausgebildet sein. Denkbar sind beispielsweise auch Leuchtkörperanordnungen, bei denen die Lichtbänke ringförmig ausgebildet sind, etwa in einem System konzentrischer Ringe oder eine Leuchtkörperanordnung mit L-förmig verlaufenden Lichtbänken. Neben rechteckigen und U-profilförmigen Formen kommen auch Lichtbänke in Betracht, deren Frontflächen, bzw. Vorderseiten elliptisch, rund oder spitzzulaufend sind.

Die Lichtbänke können, einer Kontur des Leuchtengehäuses folgend, verformt sein, damit sie sich harmonisch und platzsparend in die jeweilige geometrische Form des Leuchtengehäuses einpassen. Insbesondere bei Heckleuchten, die sich vom Heck in den flachen Seitenbereich erstrecken, ist eine gerundete Form (Bogenform) der Lichtbänke vorteilhaft.

Als Lichtquellen sind, wie bei einer weiteren bevorzugten Ausführungsform der Erfindung vorgesehen, LEDs aufgrund ihrer kompakten Bauform und Langlebigkeit besonders geeignet. Sie sind in vielen Abstrahlungsfarben und Leistungen am Markt erhältlich. Insbesondere kann durch eine geeignete Anordnung von LEDs die erforderliche Lichtverteilung ohne komplexe Reflektoren realisiert werden. Die den Lichtbänken zugeordneten LEDs sowie die ggf. zusätzlich anderen Lichtfunktionen zugeordneten LEDs können kostengünstig und bauraumsparend auf einer gemeinsamen Leiterplatte, beispielsweise einer flexiblen zwei- oder dreidimensionalen Platine (FPC) kontaktiert werden. Dies ermöglicht eine besonders flache Bauweise der Leuchte. Es können jedoch auch herkömmliche Glühlampen-Reflektorsysteme oder LED-Reflektorsysteme verwendet werden.

Nach einer weiteren bevorzugten Ausführungsform der Erfindung ist es vorgesehen, dass den Leuchtkörpern jeweils eine Lichtquelle zugeordnet ist, die als ein von wenigstens einer LED gespeister stabförmiger Lichtleiter ausgebildet ist, und die an der Rückseite des jeweiligen Leuchtkörpers angeordnet ist. Dadurch ist es möglich, in an sich bekannter Weise transparente Lichtleiter, in die das Licht an den Lichtleiterenden eingekoppelt wird, wie sie beispielsweise zur Realisierung eines Schlusslichtes bereits Verwendung finden, insbesondere in Verbindung mit den langgestreckten Lichtbänken vorteilhaft zu kombinieren.

Besonders vorteilhaft ist es, wie bei einer weiteren bevorzugten Ausführungsform der Erfindung vorgesehen, die Lichtbänke als Hohlkörper mit offenen Rückseiten auszubilden. Dadurch können die Lichtquellen, direkt rückwärtig in die Lichtbänke einstrahlen und diese ausleuchten. Dadurch entstehen keine Verluste bei der Einkopplung des Lichtes in die Lichtbänke . Zudem wirkt sich dies auf die Lichtbänke gewichtssparend aus. Die Lichtbänke können dann einfach auf die Lichtleiter oder die anderen Lichtquellen aufgesteckt, bzw. aufgesetzt werden.

Die Lichtbänke können aus einem lichtstreuenden Material, vorzugsweise als Kunststoffspritzteile, hergestellt sein. Es ist jedoch auch möglich, dass die Lichtbänke mit lichtstreuenden Partikeln dotiert oder mit einer lichtstreuenden Folie beschichtet sind. Auch eine Kombination verschiedener lichtstreuender Mittel ist denkbar. Außer durch die Wahl der lichtstreuenden Mittel kann die Opazität und damit die homogenisierende Wirkung der Lichtbänke auch durch eine entsprechende Wahl der Wandstärken der Hohlkörper eingestellt werden.

Zudem kann vorgesehen sein, dass die lichtstreuenden Mittel, insbesondere im Falle der Verwendung von Streupartikeln oder Streufolien, rückreflektierende Eigenschaften aufweisen, wenigstens auf der der Lichtabschlussscheibe zugewandte Vorderseite der Lichtbänke. Dadurch können die Lichtbänke gleichzeitig die für die Heckbeleuchtung vorgeschrieben rückreflektierenden Eigenschaften erfüllen. Im Falle einer Leuchtkörperanordnung mit horizontal angeordneten, langgestreckten Lichtbänken erscheinen diese dann im ausgeschalteten Zustand der Leuchte als horizontal verlaufende Leuchtstreifen, sobald sie von einem rückwärtigen anderen Verkehrsteilnehmer angeleuchtet werden. Im Falle einer ringförmigen oder L-förmigen Anordnung entstehen entsprechende Leuchtbilder. Zusätzliche separate Rückreflektoren können dadurch entfallen, was sich zusätzlich kostengünstig und bauraumsparend auswirkt.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: eine vereinfachte perspektivische Übersichtsansicht einer Heckleuchte eines Kraftfahrzeuges, mit mehreren Lichtbänken und mehreren Funktionsbereichen,
- Figur 2:: eine schematische Detaildarstellung einer Heckleuchte in einer Seitenansicht im Schnitt, mit LEDs als Lichtquellen und Lichtbänken aus lichtstreuendem Material,
- Figur 3:: eine zweite Ausführungsform der Heckleuchte, mit Lichtbänken mit lichtstreuenden Folien,
- Figur 4:: eine dritte Ausführungsform der Heckleuchte, mit Lichtbänken mit lichtstreuenden Partikeln,
- Figur 5:: eine vierte Ausführungsform der Heckleuchte, mit Lichtleitern als Lichtquellen,
- Figur 6:: eine fünfte Ausführungsform der Heckleuchte, mit einem Glühlampen-Reflektor-System als Lichtquelle, und
- Figur 7:: eine sechste Ausführungsform der Heckleuchte, mit einem LED-Reflektor-System als Lichtquelle.

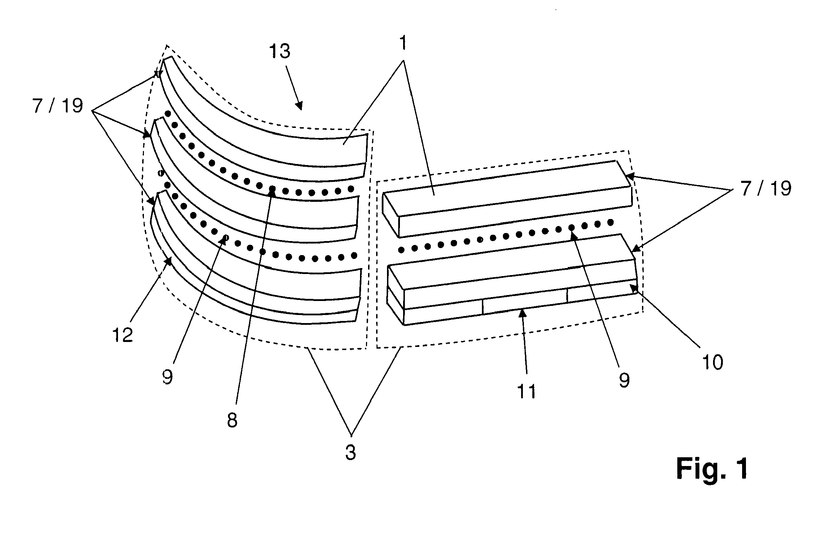

Fig. 1 zeigt eine (linke) Heckleuchte eines Kraftfahrzeuges mit einem ersten Funktionsbereich 7 und mehreren innerhalb des Funktionsbereichs 7 liegenden, als weitere Funktionsbereiche 8, 9, 10, 11, 12 ausgebildeten Trennbereichen, die in einem (geteilten) Leuchtengehäuse 13 untergebracht sind, das von einer (geteilten) klaren Lichtabschlussscheibe 3 abgedeckt ist, die sich über eine linke hintere Fahrzeugkante erstreckt. Durch die Lichtabschlussscheibe 3 können die einzelnen Funktionsbereiche 7-11 betrachtet werden. Der Funktionsbereich 7 ist vorteilhaft als ein mehrzeiliges Schlusslicht ausgebildet, das in dem linken Leuchtenteil von Fig. 1 drei Leuchtstreifen und in dem rechten Leuchtenteil zwei Leuchtstreifen umfasst. Den einzelnen Leuchtstreifen des Funktionsbereichs 7 ist jeweils ein Leuchtkörper 1 (eine Lichtbank) zugeordnet, wobei die beiden rechtsseitigen Lichtbänke 1 rechteckig gerade ausgebildet sind. Die drei linksseitigen Lichtbänke 1 sind der Kontur des Leuchtengehäuses 13, bzw. der Lichtabschlussscheibe 3 entsprechend, bogenförmig gerundet. Die Lichtbänke 1 bilden eine Leuchtkörperanordnung 19. Als weitere Funktionsbereiche, in Fig. 1 angedeutet durch gepunktete (LED-) Reihen, sind ein Fahrtrichtungsanzeiger 8 (linker Leuchtenteil) und ein Bremslicht 9 (linker und rechter Leuchtenteil) vorgesehen. Weiterhin sind eine Nebelschlussleuchte 10 und ein Rückfahrscheinwerfer 11 angedeutet, denen eine weitere (gemeinsame) Lichtbank 1 mit einem separaten inneren Abstrahlbereich für den Rückfahrscheinwerfer 11 zugeordnet ist (rechter Leuchtenteil). Schließlich ist noch ein Rückstrahler 12, angedeutet durch eine weitere Lichtbank 1 (linker Leuchtenteil), vorgesehen. Der Rückstrahler 12 kann bei retroreflektierenden Eigenschaften wenigstens einer der Lichtbänke 1 auch entfallen.

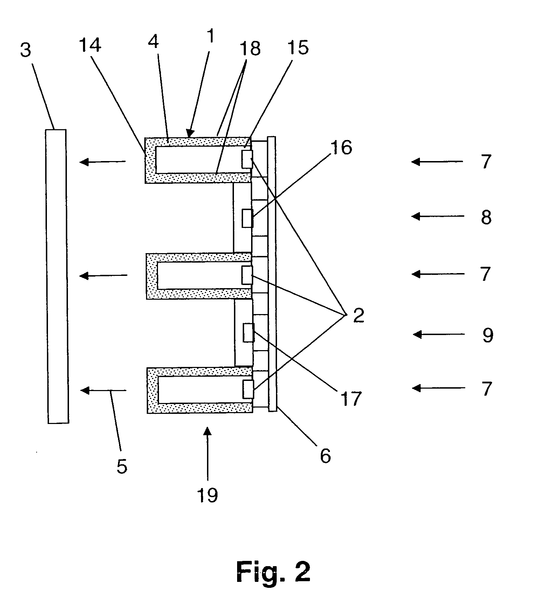

Die erfindungsgemäßen Lichtbänke 1 sind im Detail in den Figuren 2 bis 6 gezeigt. In der Fig. 2 sind drei horizontal verlaufende langgestreckte Lichtbänke 1 parallel beabstandet angeordnet, die einen ersten Funktionsbereich, beispielsweise das mehrzeilige Schlusslicht 7, bilden. Die Lichtbänke 1 sind als U-profilförmige rechteckige Hohlkörper mit offener Rückseite 15 ausgebildet. An den Rückseiten 15 sind als Lichtquellen 2, LEDs vorgesehen, die ihr Licht direkt in die offenen Rückseiten 15 einstrahlen. Die Hohlkörper 1 sind aus einem lichtstreuenden Material 4, vorteilhaft als Kunststoffspritzteile, hergestellt. Die als dreidimensionale, diffus streuende optische Elemente wirkenden Lichtbänke 1 leuchten im Wesentlichen über ihre Vorderseiten 14 entsprechend dem in sie eingestrahlten Licht, in Richtung 5 zu der Lichtabschlussscheibe 3 hin.

Zwischen den Lichtbänken 1 sind zwei weitere Leuchtenfunktionsbereiche, beispielsweise der Fahrtrichtungsanzeiger 8 und das Bremslicht 9 mit ihren jeweils zugehörigen Lichtquellen 16, bzw. 17, vorzugsweise LEDs, angeordnet. Die LEDs 2, 16, 17 sind rückseitig auf einer gemeinsamen Platine 6 kontaktiert.

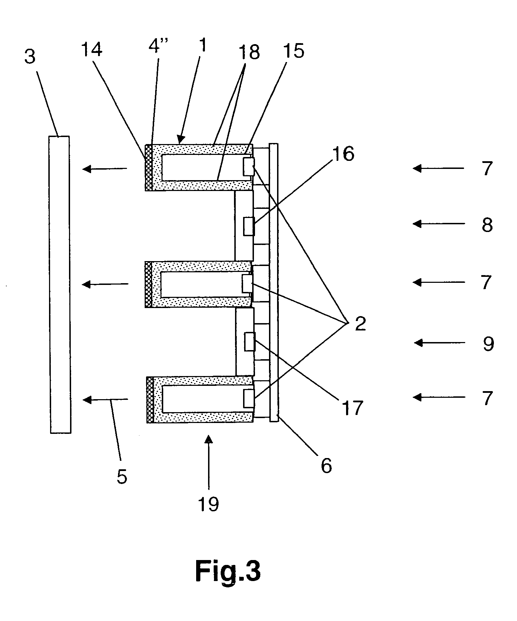

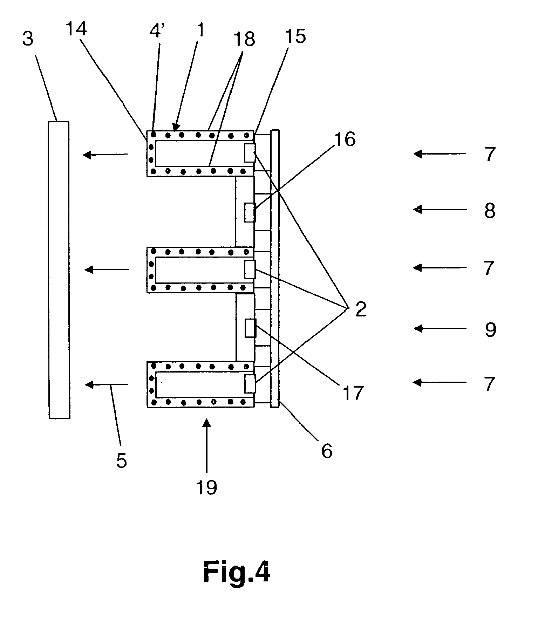

Die Lichtbänke 1 sind, je nach Funktionsbereich und Einbauort mit geeigneten lichtstreuenden Mittel 4, 4', 4" versehen, die eine bestimmte Opazität erzeugen. Die in Fig. 3 gezeigten Lichtbänke 1 weisen an ihren Vorderseiten 14 als zusätzliche lichtstreuende Mittel 4" Folien auf, die zusätzlich rückreflektierende Eigenschaften haben und die Funktion des Rückstrahlers übernehmen. In Fig. 4 sind die Lichtbänke 1 mit als Streupartikeln ausgebildeten lichtstreuenden Mitteln 4' dotiert, die diffus streuend wirken.

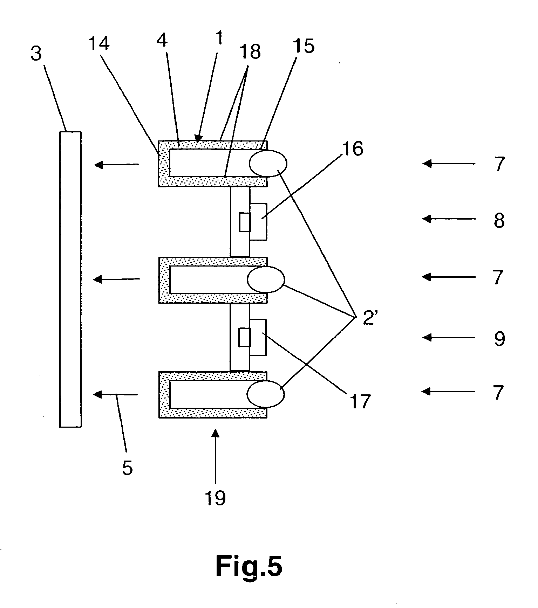

Fig. 5 zeigt eine weitere Ausführungsform, bei der die Lichtbänke 1 wiederum aus einem lichtstreuenden Material hergestellt sind. Als Lichtquellen 2' sind konventionelle transparente Lichtleiter mit (nicht dargestellten) seitlich einkoppelnden LEDs vorgesehen. Die Lichtbänke 1 sind über die Lichtleiter 2' gesetzt.

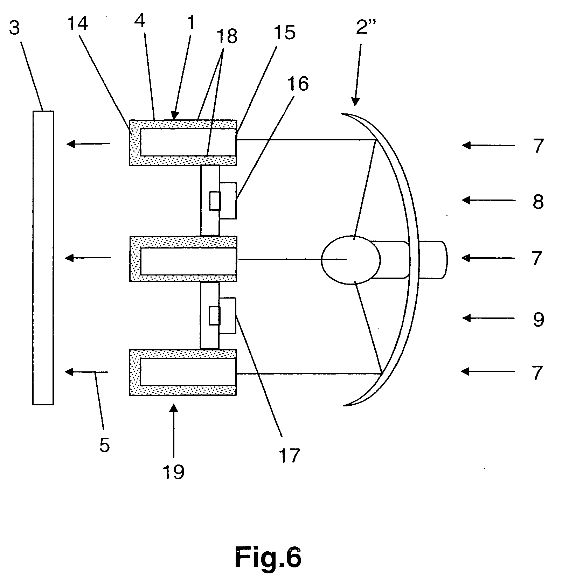

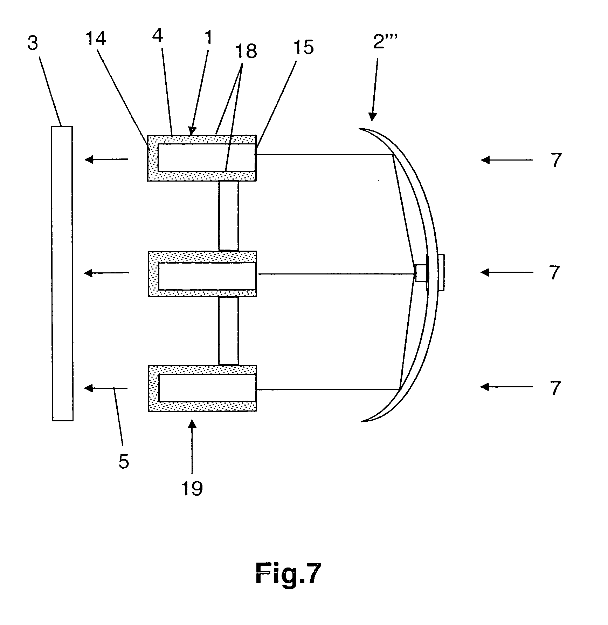

Schließlich zeigen die Figuren 6 und 7 noch zwei weitere Ausführungsformen, bei denen eine Glühlampe mit einem zugehörigen Reflektor eine Lichtquelle 2" bildet, bzw. eine oder mehrere LEDs, beispielsweise eine LED-Reihe, mit einem zugehörigen Reflektor als eine Lichtquelle 2''' vorgesehen ist. Die Lichtquellen 2", bzw. 2''' sind zentral rückseitig angeordnet und leuchten die Lichtbänke 1 über die Reflektoren großflächig aus. In der Figur 7 sind die Trennbereiche als nichtleuchtende Trennflächen ausgebildet.

### Bezugszeichenliste

- 1: Leuchtkörper / Lichtbank
- 2, 2', 2", 2''': Lichtquelle
- 3: Lichtabschlussscheibe
- 4, 4', 4": lichtstreuende Mittel
- 5: Abstrahlrichtung
- 6: Platine
- 7: Erster Leuchtenfunktionsbereich
- 8: Zweiter Leuchtenfunktionsbereich
- 9: Dritter Leuchtenfunktionsbereich
- 10: Vierter Leuchtenfunktionsbereich
- 11: Fünfter Leuchtenfunktionsbereich
- 12: Sechster Leuchtenfunktionsbereich
- 13: Leuchtengehäuse
- 14: Vorderseite
- 15: Rückseite
- 16: Lichtquelle
- 17: Lichtquelle
- 18: Seitenwand
- 19: Leuchtkörperanordnung

## Patentansprüche

1. Fahrzeugleuchte, insbesondere Heckleuchte eines Kraftfahrzeuges, mit wenigstens einer in einem Leuchtengehäuse angeordneten Lichtquelle und mit einer das Leuchtengehäuse abschließenden
transparenten Lichtabschlussscheibe,
**dadurch gekennzeichnet,**
**dass** wenigstens einer zu einem ersten Leuchtenfunktionsbereich (7) zugeordneten Lichtquelle (2, 2', 2", 2'''), auf der der Lichtabschlussscheibe (3) zugewandten Seite eine Leuchtkörperanordnung (19) vorgelagert ist, die im Wesentlichen aus
mehreren durchleuchtbaren, lichtstreuende Mittel (4, 4', 4") aufweisenden Leuchtkörpern (1) besteht, und dass zwischen den Leuchtkörpern (1) wenigstens ein Trennbereich vorgesehen ist, gegenüber dem die Leuchtkörper (1) räumlich hervorstehen.

2. Fahrzeugleuchte nach Anspruch 1,
**dadurch gekennzeichnet,**
**dass** die zwischen den Leuchtkörpern (1) vorgesehenen Trennbereiche wenigstens einen weiteren Leuchtenfunktionsbereich (8, 9, 10, 11, 12) mit wenigstens einer weiteren Lichtquelle (16, 17) aufweisen.

3. Fahrzeugleuchte nach Anspruch 1 oder 2,
**dadurch gekennzeichnet,**
**dass** wenigstens ein Leuchtkörper (1) der Leuchtkörperanordnung (19) eine quer zu einer Abstrahlrichtung (5) langgestreckte Form aufweist.

4. Fahrzeugleuchte nach einem der Ansprüche 1 bis 3,
**dadurch gekennzeichnet,**
**dass** die Leuchtkörperanordnung (19) mehrere quer zu der Abstrahlrichtung (5) langgestreckte, stapelförmig angeordnete Leuchtkörper (1) aufweist.

5. Fahrzeugleuchte nach Anspruch 4,
**dadurch gekennzeichnet,**
**dass** die stapelförmig angeordneten Leuchtkörper (1) horizontal ausgerichtet sind.

6. Fahrzeugleuchte nach einem der Ansprüche 1 bis 5,
**dadurch gekennzeichnet,**
**dass** wenigstens ein Leuchtkörper der Leuchtkörperanordnung (19) ringförmig ausgebildet ist.

7. Fahrzeugleuchte nach einem der Ansprüche 1 bis 6,
**dadurch gekennzeichnet,**
**dass** wenigstens ein Leuchtkörper der Leuchtkörperanordnung (19) L-förmig ausgebildet ist.

8. Fahrzeugleuchte nach einem der Ansprüche 1 bis 7,
**dadurch gekennzeichnet,**
**dass** die Leuchtkörper (1) als Hohlkörper ausgebildet sind, die auf der der Lichtabschlussscheibe (3) abgewandten Rückseite (15) offen sind.

9. Fahrzeugleuchte nach einem der Ansprüche 1 bis 8,
**dadurch gekennzeichnet,**
**dass** die Leuchtkörper (1) Seitenwände (18) aufweisen, die im Wesentlichen parallel zur Abstrahlrichtung (5) verlaufen.

10. Fahrzeugleuchte nach einem der Ansprüche 1 bis 9,
**dadurch gekennzeichnet,**
**dass** die Leuchtkörper (1) aus einem lichtstreuenden Material als dem lichtstreuenden Mittel (4) hergestellt sind.

11. Fahrzeugleuchte nach einem der Ansprüche 1 bis 10,
**dadurch gekennzeichnet,**
**dass** die Leuchtkörper (1) mit lichtstreuenden Partikeln als dem lichtstreuenden Mittel (4') dotiert sind.

12. Fahrzeugleuchte nach einem der Ansprüche 1 bis 11,
**dadurch gekennzeichnet,**
**dass** die Leuchtkörper (1) mit einer lichtstreuenden Folie als dem lichtstreuenden Mittel (4") beschichtet sind.

13. Fahrzeugleuchte nach einem der Ansprüche 1 bis 12,
**dadurch gekennzeichnet,**
**dass** den Leuchtkörpern (1) jeweils mindestens eine als LED ausgebildete Lichtquelle (2) zugeordnet ist.

14. Fahrzeugleuchte nach einem der Ansprüche 1 bis 13,
**dadurch gekennzeichnet,**
**dass** den Leuchtkörpern (1) jeweils eine Lichtquelle (2') zugeordnet ist, die als ein von wenigstens einer LED gespeister Lichtleiter ausgebildet ist, und die an der Rückseite (15) des jeweiligen Leuchtkörpers (1) angeordnet ist.

15. Fahrzeugleuchte nach einem der Ansprüche 1 bis 14,
**dadurch gekennzeichnet,**
**dass** der Leuchtkörperanordnung (19) eine als eine Glühlampe mit einem zugehörigen Reflektor ausgebildete Lichtquelle (2") zugeordnet ist.

16. Fahrzeugleuchte nach einem der Ansprüche 1 bis 15,
**dadurch gekennzeichnet,**
**dass** der Leuchtkörperanordnung (19) eine Lichtquelle (2'''), die mindestens eine LED mit einem zugehörigen Reflektor aufweist, zugeordnet ist.

17. Fahrzeugleuchte nach einem der Ansprüche 1 bis 16,
**dadurch gekennzeichnet,**
**dass** die lichtstreuenden Mittel (4, 4', 4") wenigstens auf der der Lichtabschlussscheibe (3) zugewandten Vorderseite (14) der Leuchtkörper (1) rückreflektierende Eigenschaften aufweisen.

18. Fahrzeugleuchte nach einem der Ansprüche 1 bis 17,
**dadurch gekennzeichnet,**
**dass** die Leuchtkörper (1) als Kunststoffspritzteile hergestellt sind.

19. Fahrzeugleuchte nach einem der Ansprüche 1 bis 18,
**dadurch gekennzeichnet,**
**dass** die Leuchtkörper (1), einer Kontur des Leuchtengehäuses (13) folgend, verformt sind.

20. Fahrzeugleuchte nach einem der Ansprüche 1 bis 19,
**dadurch gekennzeichnet,**
**dass** wenigstens die als LEDs ausgebildeten Lichtquellen (2) des ersten Leuchtenfunktionsbereichs (7) auf einer, an der der Lichtabschlussscheibe (3) abgewandten Seite der Lichtkörper (1) angeordneten, gemeinsamen Platine (6) kontaktiert sind.
